# DEMANDE DE BREVET EUROPEEN

(11) **EP 1 215 786 A1**
(43) Date de publication de la demande: **19.06.2002**
(21) Numéro de dépôt: 01490046.8
(22) Date de dépôt: 31.10.2001
(51) Int. Cl.: H02G 1/08, B65H 57/14

(54) **Accessoire de tirage de câbles**

(30) Priorité: 12.12.2000 FR 0016117
(71) Demandeur: Tolmega, S.A., 62400 Bethune (FR)
(72) Inventeur: Colmart, André, 62290 Noeux Les Mines (FR)
(74) Mandataire: Hennion, Jean-Claude

(57) **Abrégé**

Accessoire pour le tirage de câbles comprenant un support (3) avec des moyens (4) de fixation sur un chemin de câbles et un moyen (5) de guidage dudit câble **caractérisé** en ce que le moyen (5) de guidage est une bague (5) qui, sensiblement circulaire, présente une partie amovible (5A) pour ouvrir ou fermer ladite bague et cette bague présente au moins localement un bord interne arrondi.

## Description

L'invention se rapporte à un accessoire pour le tirage de câbles.

Dans l'industrie, les câbles électriques sont portés par des chemins de câbles métalliques ou en matières plastiques ou posés dans des goulottes.

Ces câbles sont déroulés depuis une bobine et le poseur de câbles doit alors tirer progressivement ledit câble le long du parcours qu'il a préalablement déterminé.

Ce parcours est généralement long et sinueux, de sorte que cette tâche est mal aisée.

En effet, dans les virages ou courbes plus ou moins accentués du parcours, le câble frotte sur les parois du chemin de câbles et/ou sur les autres câbles déjà posés, ce qui engendre, d'une part, un besoin d'augmenter la force de traction et, d'autre part, un risque d'abîmer l'enveloppe isolante du câble électrique.

Pour pallier à ces problèmes, plusieurs solutions sont possibles.

La première solution consiste à faire intervenir une personne qui se place au niveau du changement de direction du chemin de câbles pour guider ledit câble et assister la personne chargée de tirer ce câble.

Un autre solution consiste à fixer, dans l'angle du chemin de câble, un morceau de bois ou un morceau de mousse ou de plastique réduisant le frottement.

Il s'agit d'une méthode artisanale qui, malheureusement, n'apporte que très peu d'amélioration.

Pour des câbles de diamètre supérieur à trois millimètres, il est connu un dispositif constitué de quatre diabolo formant chacun un des quatre cotés d'un anneau carré.

Les diabolos sont montés libre en rotation sur un axe, de sorte que lors de la traction, le câble se positionne dans la gorge du diabolo qui assure ainsi le guidage du câble.

On conçoit tout de suite que cet accessoire soit encombrant et coûteux à produire.

En outre, la câble doit avoir un diamètre adapté à la taille des diabolos sous peine que le système ne fonctionne pas correctement.

L'invention a pour objet un dispositif qui remédie aux problèmes évoqués ci-avant.

A cet effet, l'invention a pour objet un accessoire pour le tirage de câbles comprenant un support avec des moyens de fixation sur un chemin de câbles et un moyen de guidage dudit câble, cet accessoire étant caractérisé en ce que le moyen de guidage est une bague qui, sensiblement circulaire, présente une partie amovible pour ouvrir ladite bague et cette bague présente au moins localement un bord interne arrondi.

L'invention sera bien comprise à l'aide de la description ci-après faite à titre d 'exemple non limitatif et en regard du dessin qui représente :
- figures 1 à 4 : différents exemples d'accessoires ;
- figure 5 : une partie de l'accessoire ;
- figure 6 : une coupe de la figure 5.

En se reportant au dessin, on voit un accessoire 1 pour tirer des câbles dans des goulottes 2 ou chemin de câbles.

Cet accessoire se positionne de préférence, mais non limitativement, dans les zones de changement de direction du chemin de câbles.

Cet accessoire comprend un support 3 avec des moyens 4 de fixation sur un chemin de câbles et un moyen 5 de guidage dudit câble.

La base 3A de ce support présentera donc les moyens 4 de fixation.

Il pourra s'agir de moyens de clipsage.

Par exemple, cet accessoire se fixe provisoirement sur le fond d'un chemin de câbles entre deux fils 6 longitudinaux ou transversaux du chemin.

S'il s'agit d'une tôle perforée, les moyens de fixation seront bien évidemment adaptés.

L'opération de fixation est, de préférence, rapide et ne nécessite pas d'outil.

Selon une caractéristique de cet accessoire 1, le moyen 5 de guidage est une bague 5 qui, sensiblement circulaire, présente une partie amovible 5A pour ouvrir ou fermer ladite bague et cette bague présente au moins localement un bord 8 interne arrondi.

Dans une forme de réalisation, le bord 8 interne est rapporté sur la partie du support 3 en forme de bague.

Par exemple, le bord 8 interne se présente sous la forme d'un jonc 8 semi torique avec une gorge 8A ou une nervure, non représentée, venant coopérer avec le support.

La fixation de ce jonc peut être réalisée avec une couche d'adhésif ou une soudure haute fréquence ou un assemblage mécanique.

Dans une autre forme de réalisation, le support en forme de bague présente directement ce bord arrondi.

Il peut être obtenu par usinage ou moulage.

On a représenté plusieurs exemples d'accessoire.

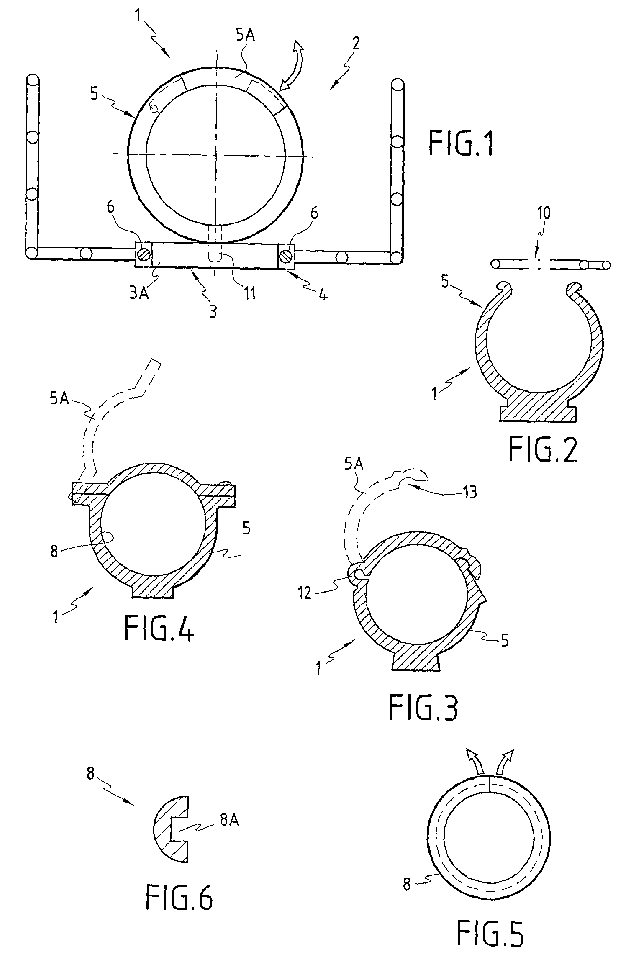

Le premier, en figure 2, apparaît comme un support en U avec des branches courbes dont les extrémités libres sont fermées par un anneau 10 aplati. C'est l'élasticité des branches du U qui permettent de mettre en place l'anneau aplati.

En figure 3, l'anneau est formé de deux parties reliées par une charnière 12 constituée par un voile mince. Un moyen d'accrochage 13 permet de verrouiller la partie amovible sur la partie face. Cette partie amovible est représentée en pointillé lorsque l'anneau est ouvert.

En figure 4, il s'agit d'une variante de la figure 3. La charnière comprend un axe de pivotement.

En figure 5, il a été représenté le jonc 8 qui vient se placer à l'intérieur d'un support en forme d'anneau. Une coupe de ce jonc apparaît en figure 6.

Le jonc 8 recouvre ainsi la face interne de l'anneau ainsi qu'une partie des flancs dudit anneau.

Un tel accessoire est relativement simple à fabriquer et convient avantageusement avec tous les types de diamètre de câbles, sous réserve que le câble soit de diamètre inférieur au diamètre de l'anneau.

Il n'y pas ou quasiment pas de rupture du bord interne .

La zone sollicitée de cet accessoire 1 est principalement localisée sur les cotés et sur la partie inférieure de l'anneau.

Lorsque le poseur de câble a tiré son câble, il ouvre alors les anneaux pour en extraire le câble.

Le plan dans lequel se trouve l'anneau peut être soit choisi d'avance par rapport aux moyens de fixation, soit l'anneau est guidé en rotation autour d'un axe 11 perpendiculaire au plan dans lequel se situe l'embase 30, de sorte qu'il s'oriente automatiquement.

## Revendications

1. Accessoire pour le tirage de câbles comprenant un support (3) avec des moyens (4) de fixation sur un chemin de câbles et un moyen (5) de guidage dudit câble **caractérisé en ce que** le moyen (5) de guidage est une bague (5) qui, sensiblement circulaire, présente une partie amovible (5A) pour ouvrir ou fermer ladite bague et cette bague présente au moins localement un bord (8) interne arrondi.

2. Accessoire pour le tirage de câbles selon la revendication 1 **caractérisé en ce qu'**il est dépourvu de galets ou diabolos.

3. Accessoire pour le tirage de câbles selon la revendication 1 **caractérisé en ce que** le bord (8) interne est rapporté sur la partie du support en forme de bague.

4. Accessoire pour le tirage de câbles selon la revendication 1 **caractérisé en ce que** le bord (8) interne se présente sous la forme d'un jonc 8 semi torique avec une gorge (8A).

5. Accessoire pour le tirage de câbles selon la revendication 1 **caractérisé en ce que** le bord (8) interne se présente sous la forme d'une nervure venant coopérer avec le support.

6. Accessoire pour le tirage de câbles selon la revendication 1 **caractérisé en ce que** le support en forme de bague présente directement ce bord arrondi.

7. Accessoire pour le tirage de câbles selon la revendication 1 **caractérisé en ce que** le support a une forme en U avec des branches courbes dont les extrémités libres sont fermées par un anneau (10) aplati.

8. Accessoire pour le tirage de câbles selon la revendication 1 **caractérisé en ce que** l'anneau ou la bague est formé de deux parties reliées par une charnière (12).

9. Accessoire pour le tirage de câbles selon la revendication 7 **caractérisé en ce que** la charnière (12) est constituée par un voile mince.

10. Accessoire pour le tirage de câbles selon la revendication 1 **caractérisé en ce que** l'anneau ou la bague est guidé en rotation autour d'un axe (11) perpendiculaire au plan dans lequel se situe l'embase (3A).
